# EUROPEAN PATENT SPECIFICATION

(11) **EP 2 141 978 B1**
(45) Date of publication and mention of the grant of the patent: **23.01.2013**
(21) Application number: 08724152.7
(22) Date of filing: 31.03.2008
(51) Int. Cl.: A01D 34/64, A01B 59/048, A01B 73/00, A01B 59/06

(54) **DEVICE FOR FRONTMOUNTING OF AN IMPLEMENT ON A VEHICLE**
VORRICHTUNG ZUR FRONTMONTAGE EINES INSTRUMENTS AUF EINEM FAHRZEUG
DISPOSITIF POUR LE MONTAGE AVANT D'UN ACCESSOIRE SUR UN VÉHICULE

(30) Priority: 27.04.2007 SE 0701014
(43) Date of publication of application: 13.01.2010
(73) Proprietor: GGP Sweden AB, 573 28 Tranås (SE)
(72) Inventor: SILJEHOLM, Roger, 573 38 Tranås (SE); KLASSON, Jan, 573 40 Tranås (SE)
(74) Representative: Simonsson, Erik
(86) International application number: PCT/SE2008/000233
(87) International publication number: WO 2008/133569

(56) References cited:
- EP-A1- 0 245 824
- EP-A1- 0 966 876
- EP-A1- 1 759 569
- WO-A1-00/78125
- US-A- 4 442 660
- US-A- 4 563 019
- US-A- 5 079 907
- US-A- 5 765 348

## Description

### Field of the Invention

The present invention relates to an implement, such as a lawnmower assembly, intended to be front-mounted on an implement-carrying vehicle, said implement being connected to a front-mounted device having a supporting frame from which the implement is suspended and which has at least one supporting arm, which is adapted to be mounted in the front part of the vehicle in such a manner that it projects forwards from the vehicle and is connected to the vehicle, pivotally about a transverse, horizontal first axis for pivoting the supporting frame between a lowered position, which corresponds to the working position of the implement, and an elevated position, which corresponds to the transport position of the implement.

### Background Art

A prior-art device of this kind is disclosed in WO 00/78125 A1. This prior-art device will be described below with reference to Fig. 1, which is taken from WO 00/78125 A1. Fig. 1 is a schematic side view showing a lawnmower assembly that is front-mounted on an implement-carrying vehicle in a working position.

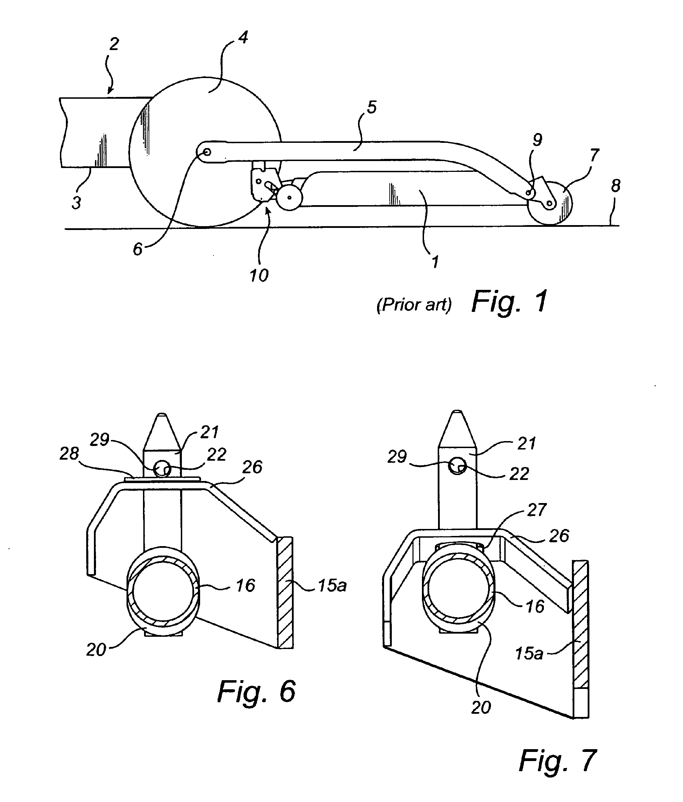

Fig. 1 shows a lawnmower assembly 1, which is front-mounted on an implement-carrying vehicle 2, of which only part of a vehicle chassis 3 and one (the right one) of the two front wheels 4 are shown.

The lawnmower assembly is suspended from two supporting arms 5, which at their rear end are pivotally mounted on a respective one of the projecting axles 6 of the two front wheels 4 and which project forwards from the vehicle 2. The supporting arms 5 are pivotable between a lowered position, which is shown in Fig. 1 and in which support wheels 7, which are arranged in the front portion of the lawnmower assembly 1, rest on the ground 8, and an elevated pivoting position (not shown), in which the lawnmower assembly 1 is in a transport position in which the support wheels 7 are raised from the ground 8.

The lawnmower assembly 1 is in its front portion connected, pivotally about an axis 9 parallel to the front wheel axles 6, to the supporting arms 5 at the front ends thereof to be pivotable relative to the supporting arms 5. When the lawnmower assembly 1 is in a determined pivoting position relative to the supporting arms 5 and the supporting arms 5 are in their lowered position, in which they are substantially horizontal, the lawnmower assembly 1 takes a substantially horizontal working position, as shown in Fig. 1. When the lawnmower assembly 1 is in the thus defined, substantially horizontal working position, it is connected in its rear portion to each supporting arm 5 by means of a coupling mechanism 10, which is disengageable to release the lawnmower assembly 1 for pivoting relative to the supporting arms 5.

When the supporting arms 5 are raised from the lowered position shown in Fig. 1 to the elevated pivoting position, the lawnmower assembly 1 is pivoted to the transport position, whereby the support wheels 7 are raised from the ground 8. Since, in this pivoting motion, the lawnmower assembly 1 is pivoted about a point in each coupling mechanism 10, which point is thus located close to the rear portion of the lawnmower assembly 1, the vertical position of the rear portion is not appreciably changed as the lawnmower assembly 1 pivots from the working position to the transport position. This means that the rear portion of the lawnmower assembly 1 is positioned relatively low, also when the lawnmower assembly 1 is in the transport position, which may cause problems when the implement-carrying vehicle 2 with the front-mounted lawnmower assembly 1 has to pass an obstacle, such as a kerbstone.

### Summary of the Invention

The object of the present invention is therefore to provide a device which is adapted for front-mounting of an implement, such as a lawnmower assembly, on an implement-carrying vehicle and which is designed such that, when the implement is transferred, by the pivoting of the supporting frame, from the working position to the transport position, also the rear portion of the implement is moved to a considerably higher level above the ground.

According to the invention, this object is achieved by a device which is of the type stated by way of introduction and which is characterised in that the implement is suspended from the supporting frame via two suspension arms, which are substantially parallel to said at least one supporting arm and carry the implement in a non-pivoting manner and which have each a front end portion that carries a support wheel, which is adapted, when the implement is in its working position, to roll on the ground, and a rear end portion and which are connected, pivotally about a second axis parallel to the first axis, to the supporting frame in a point located between the end portions, the suspension arms being pivotable relative to the supporting frame between a first end position, which is a stop position, and a second end position, from which the suspension arms are freely pivotable in the direction of the stop position and in which the suspension arms are releasably locked with the aid of a locking means, which prevents pivoting of the suspension arms from the second end position in the direction opposite to said direction only, the suspension arms being located in the second end position when the supporting frame is in the lowered position and the implement is, thus, in the working position, and that the centre of gravity of the unit suspended from the supporting frame and consisting of the complete implement, including the suspension arms, is located in front of said second axis, whereby the suspension arms, as the supporting frame pivots from the lowered position to the elevated position, are being automatically pivoted by the weight of said unit relative to the supporting frame, from the second end position to the stop position, so that the implement is raised at its rear portion, the suspension arms, as the supporting frame pivots from the lowered position to the elevated position, reaching the stop position before the supporting frame reaches the elevated position, whereby the support wheels, as the supporting frame continues its pivoting movement to the elevated position, are being raised from the ground.

In a preferred embodiment, each of the suspension arms abuts, in the stop position, with its rear end portion against an associated stop that is fixedly attached to the supporting frame.

Preferably, the locking means comprises a locking element arranged in the rear portion of each suspension arm.

In a preferred embodiment, each locking element is formed of a pin which protrudes substantially at right angles from the associated suspension arm and extends through a slot formed in the associated stop, and a removable peg which extends through a transverse hole in the pin, the two pegs co-operating with the stops to prevent pivoting of the suspension arms from the second end position away from the first end position.

### Brief Description of the Drawings

The invention will now be described in more detail with reference to the accompanying drawings.
Fig. 1 is a schematic side view of the prior-art lawnmower assembly described above in a working position.
Fig. 2 is a perspective view of a device according to the invention which is adapted for front-mounting of a lawnmower assembly on a vehicle.
Figs 3-5 are side views of the device of Fig. 2 when mounted on a highly schematically illustrated vehicle, the supporting frame of the device being shown in a lowered position, an intermediate position and an elevated position, respectively.
Figs 6 and 7 are sectional views along the line VI-VI in Fig. 3 and VII-VII in Fig. 4, respectively, of a suspension arm with a locking element in co-operation with a stop.

### Description of a Preferred Embodiment

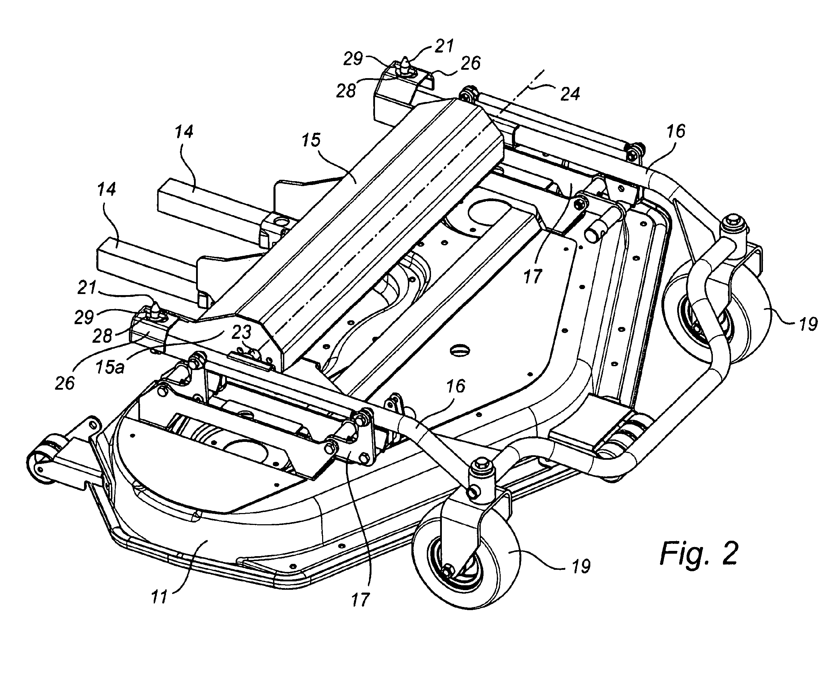

Figs 2-5 show an implement in the form of a lawnmower assembly 11, which by means of a device according to the invention is front-mounted on an implement-carrying vehicle, of which only one (the right one) of the two front wheels 12 is shown.

The device has a supporting frame 13 with two supporting arms 14, which, with the device mounted on the vehicle, project forwards therefrom, and a transverse beam 15, which is rigidly connected to the supporting arms 14 at the front ends thereof. The transverse beam 15 projects on both sides of the supporting arms 14 and has at either end a vertical end plate 15a which is rigidly connected thereto and which extends backwards a certain distance.

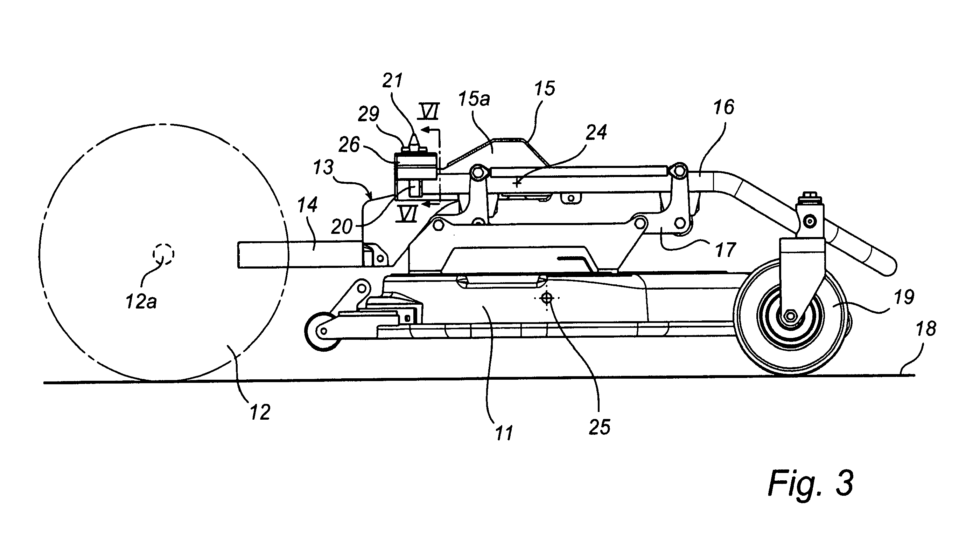

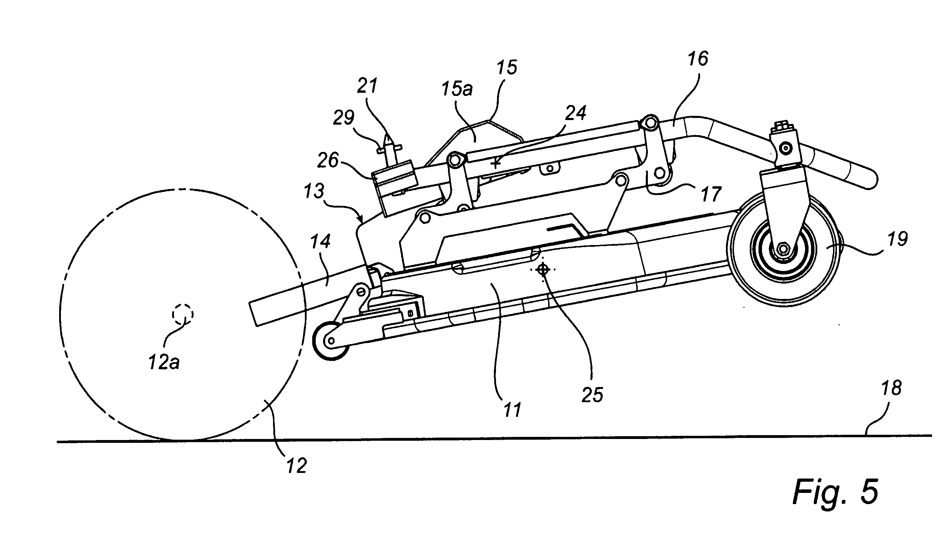

The supporting frame 13 is pivotable about a transverse, horizontal first axis (not shown) parallel to the front wheel axle 12a and located slightly in front of and below said axle. The supporting frame 13 is pivotable by means of a hydraulic lifting device (not shown) in the vehicle between a lowered position (Fig. 3), in which the supporting arms 14 are substantially horizontal and which corresponds to the working position of the lawnmower assembly 11, and an elevated position (Fig. 5), which corresponds to the transport position of the lawnmower assembly 11.

The device further has two suspension arms 16, which are parallel to the supporting arms 14 and which, as will be described in more detail below, are pivotally carried at the ends of the transverse beam 15. The two suspension arms 16 carry the lawnmower assembly 11 in a manner that prevents rotation but allows parallel displacement by means of a link arm mechanism 17 mounted between each suspension arm 16 and the lawnmower assembly 11. The link arm mechanisms 17 are adjustable by means of a hydraulic cylinder assembly (not shown) for parallel displacement of the lawnmower assembly 11 relative to the suspension arms 16 in order to set the cutting height of the lawnmower assembly, i.e. the vertical position relative to the ground 18 in the working position.

Each suspension arm 16 carries at its front end a support wheel 19, which is adapted, with the lawnmower assembly 11 in its working position, to roll on the ground 18, and has welded to its rear end an oval end plate 20 (see Figs 6 and 7), to which is welded a locking pin 21 which protrudes upwards at right angles from the arm 16 and which has a through hole 22 adjacent its upper end.

Each suspension arm 16 is pivotally connected to the supporting frame 13 by means of a journal 23. The suspension arms 16 are pivotable about a second axis 24 which is parallel to said first axis and which intersects the suspension arms in a point located between the ends thereof, the distance between said point to the rear end being significantly shorter than distance between it and the front end.

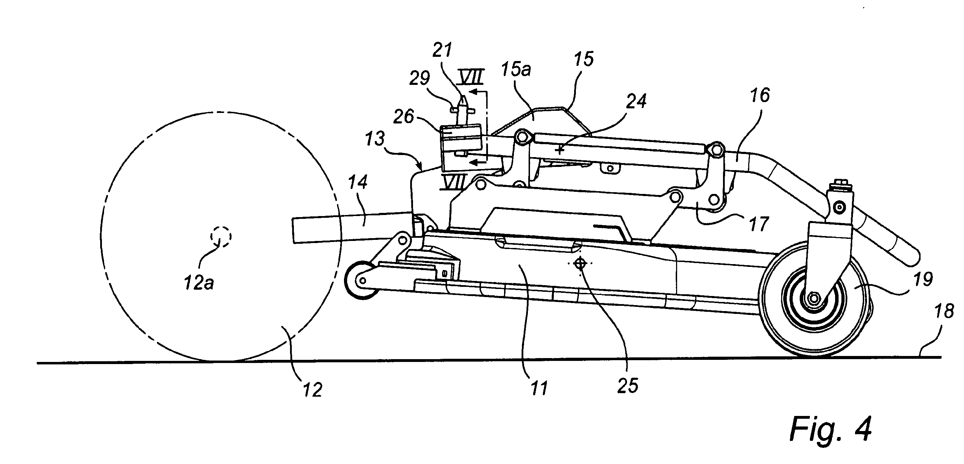

The centre of gravity 25 of the unit consisting of the lawnmower assembly 11, the link arm mechanisms 17 and the suspension arms 16 is located in front of the second axis 24, which means that owing to the weight of the unit the suspension arms 16, and thus the whole unit, strives to pivot downwards in its front portion, i.e. clockwise in Figs 3-5. Thus, when the supporting frame 13 is pivoted from the lowered position shown in Fig. 3 to the intermediate position shown in Fig. 4, the lawnmower assembly 11 is automatically raised at its rear portion, as shown in Fig. 4.

The suspension arms 16 are pivotable relative to the supporting frame 13 between a first end position (Figs 4, 5, and 7), which is a stop position, and a second end position (Figs 3 and 6). In the first end position, each of the suspension arms 16 abuts at its rear end portion from below against an associated stop 26 that is fixedly attached to the supporting frame 13. The stop 26 is in the form of a bracket welded to the associated end plate 15a of the transverse beam 15, said bracket having an elongate hole 27 which extends in the longitudinal direction of each suspension arm 16 and through which penetrates the locking pin 21 of the arm. A washer 28 is slipped over the end of the locking pin 21 protruding upwards from the stop 26 and abuts against the upper face of the stop. A removable peg 29 extends through the hole 22 in the locking pin 21. In the second end position, the peg 29 abuts against the stop via the washer 28. Thus, the suspension arms 16 are freely pivotable between their two end positions.

The function of the device will be described below starting from the initial position shown in Fig. 3, in which the supporting frame 13 is in its lowered position, the suspension arms 16 are in their second end position and the lawnmower assembly 11 is, thus, in its substantially horizontal working position at a distance from the ground 18 that is set by means of the link arm mechanisms 17 and their hydraulic cylinder assembly. In this position, with the vehicle and the lawnmower assembly 11 being in operation, the hydraulic cylinders forming part of the hydraulic lifting device of the supporting frame 13 are in a so-called floating state, which means that the supporting frame 13 can perform small pivoting movements caused by irregularities in the ground 18. When these hydraulic cylinders are activated and pivot the supporting frame 13 upwards from its lowered position, the suspension arms 16 are pivoted relative to the supporting frame 13, as a result of the centre of gravity 25 being located in front of the pivot axis 24 of the arms 16, as described above, in such a manner that the lawnmower assembly 11 is automatically raised at its rear portion while, at the same time, the support wheels 19 remain in contact with the ground (see Figs 3 and 4). During this pivotal movement, the suspension arms 16 reach their first end position, the stop position, i.e. are moved into engagement with the associated stop 26 (see Fig. 7) when the supporting frame 13 reaches its intermediate position shown in Fig. 4. As the supporting frame 13 continues its pivotal movement upwards from this intermediate position, the suspension arms 16 cannot be pivoted further relative to the supporting frame, but are pivoted jointly therewith to raise the support wheels 19 from the ground 18 and, thereby, pivot the lawnmower assembly 11 to its transport position, which it will take when the supporting frame 13 is in its elevated position (Fig. 5). In this transport position, the lawnmower assembly, as shown, is raised clear of the ground 18 at both its front portion and its rear portion.

The suspension arms 16 are prevented from pivoting from their second end position away from the first end position, i.e. in the direction away from the stops 26, by the two locking elements, which are each formed of a locking pin 21, a peg 29 and a washer 28 in co-operation with the associated stop 26. However, as stated above, the locking elements do not prevent the suspension arms 16 from pivoting from the second end position in the direction of the first end position. Nevertheless, if the pegs 29 are pulled out of the locking pins 21, the suspension arms 16 can be pivoted from their second end position away from the first end position, in which case the locking pins 21 are moved out of the holes 27 in the stops 26. Suitably, this feature is used to pivot the lawnmower assembly 11 to a position, substantially at right angles to the ground 18, which allows cleaning of the knives etc. of the cutting assembly.

## Claims

1. An implement (11), such as a lawnmower assembly, intended to be front-mounted on an implement-carrying vehicle, said implement being connected to a front-mounting device having a supporting frame (13) from which the implement is suspended and which has at least one supporting arm (14), which is adapted to be mounted in the front part of the vehicle in such a manner that it projects forwards from the vehicle and is connected to the vehicle, pivotally about a transverse, horizontal first axis for pivoting the supporting frame (13) between a lowered position, which corresponds to the working position of the implement (11), and an elevated position, which corresponds to the transport position of the implement,
**characterised in that** the implement (11) is suspended from the supporting frame (13) via two suspension arms (16), which are substantially parallel to said at least one supporting arm (14) and carry the implement in a non-pivoting manner and which have each a front end portion that carries a support wheel (19), which is adapted, when the implement is in its working position, to roll on the ground (18), and a rear end portion and which are connected, pivotally about a second axis (24) parallel to the first axis, to the supporting frame (13) in a point located between the end portions, the suspension arms (16) being pivotable relative to the supporting frame between a first end position, which is a stop position, and a second end position, from which the suspension arms are freely pivotable in the direction of the stop position and in which the suspension arms are releasably locked with the aid of a locking means (21, 26, 28, 29), which prevents pivoting of the suspension arms (16) from the second end position in the direction opposite to said direction only, the suspension arms (16) being located in the second end position when the supporting frame (13) is in the lowered position and the implement (11) is, thus, in the working position, and that the centre of gravity (25) of the unit suspended from the supporting frame (13) and consisting of the complete implement (11, 17), including the suspension arms (16), is located in front of said second axis (24), whereby the suspension arms (16), as the supporting frame (13) pivots from the lowered position to the elevated position, are being automatically pivoted by the weight of said unit relative to the supporting frame, from the second end position to the stop position, so that the implement (11) is raised at its rear portion, the suspension arms (16), as the supporting frame (13) pivots from the lowered position to the elevated position, reaching the stop position before the supporting frame reaches the elevated position, whereby the support wheels (19), as the supporting frame continues its pivotal movement to the elevated position, are being raised from the ground (18).

2. A device as claimed in claim 1, wherein each of the suspension arms (16) abuts, in the stop position, with its rear end portion against an associated stop (26) that is fixedly attached to the supporting frame (13).

3. A device as claimed in any one of the preceding claims, wherein the locking means (21, 26, 28, 29) comprises a locking element (21, 28, 29) arranged in the rear portion of each suspension arm (16).

4. A device as claimed in claims 2 and 3, wherein each locking element (21, 28, 29) is formed of a pin (21) which protrudes substantially at right angles from the associated suspension arm (16) and extends through a elongate hole (27) formed in the associated stop (26), and a removable peg (29) which extends through a transverse hole (22) in the pin (21), the two pegs (29) co-operating with the stops (26) to prevent pivoting of the suspension arms (16) from the second end position away from the first end position.

## Patentansprüche

1. Instrument (11), wie etwa eine Rasenmäherbaugruppe, das zur Frontmontage auf einem instrumenttragenden Fahrzeug bestimmt ist, wobei das Instrument mit einer Frontmontagevorrichtung verbunden ist, welche einen Stützrahmen (13), an dem das Instrument aufgehängt ist, und zumindest einen Stützarm (14) aufweist, der dazu geeignet ist, derart im Frontteil des Fahrzeugs angebracht zu sein, dass er von dem Fahrzeug nach vorne vorsteht und mit dem Fahrzeug schwenkbar um eine quer verlaufende, horizontale erste Achse zum Schwenken des Stützrahmens (13) zwischen einer abgesenkten Position, die der Arbeitsposition des Instruments (11) entspricht, und einer angehobenen Position, die der Transportposition des Instruments entspricht, verbunden ist,
**dadurch gekennzeichnet, dass** das Instrument (11) über zwei Aufhängungsarme (16) an dem Stützrahmen (13) aufgehängt ist, die im Wesentlichen parallel zu dem zumindest einen Stützarm (14) sind und das Instrument nicht schwenkend tragen, und die jeder einen Frontendabschnitt, der ein Stützrad (19) trägt, welches dazu geeignet ist, auf dem Boden (18) zu rollen, wenn das Instrument in der Arbeitsposition ist, und einen Rückendabschnitt aufweisen, und die schwenkbar um eine zweite Achse (24), welche parallel zu der ersten Achse ist, mit dem Stützrahmen (13) an einem Punkt verbunden sind, der sich zwischen den Endabschnitten befindet, wobei die Aufhängungsarme (16) bezüglich des Stützrahmens zwischen einer ersten Endposition, die eine Anschlagposition ist, und einer zweiten Endposition, aus der die Aufhängungsarme in der Richtung der Anschlagposition frei schwenkbar sind, und in der die Aufhängungsarme mithilfe eines Sperrmittels (21, 26, 28, 29), das das Schwenken der Aufhängungsarme (16) aus der zweiten Position nur in die Gegenrichtung der Richtung verhindert, lösbar gesperrt sind, schwenkbar sind, wobei sich die Aufhängungsarme (16) in der zweiten Endposition befinden, wenn der Stützrahmen (13) in der abgesenkten Position ist und das Instrument (11) daher in der Arbeitsposition ist, und dass sich der Schwerpunkt (25) der Einheit, die an dem Stützrahmen (13) aufgehängt ist und aus dem vollständigen Instrument (11, 17), einschließlich der Aufhängungsarme (16), besteht, vor der zweiten Achse (24) befindet, wodurch die Aufhängungsarme (16), wenn der Stützrahmen (13) von der abgesenkten Position in die angehobene Position schwenkt, automatisch durch das Gewicht der Einheit bezüglich des Stützrahmens aus der zweiten Endposition in die Anschlagposition schwenken, sodass das Instrument (11) an seinem hinteren Abschnitt angehoben ist, wobei die Aufhängungsarme (16), wenn der Stützrahmen (13) aus der abgesenkten Position in die angehobene Position schwenkt, die Anschlagposition erreichen, bevor der Stützrahmen die angehobene Position erreicht, wobei die Stützräder (19), wenn der Stützrahmen seine Schwenkbewegung zur angehobenen Position fortsetzt, vom Boden (18) angehoben werden.

2. Vorrichtung nach Anspruch 1, wobei jeder der Aufhängungsarme (16) in der Anschlagposition mit seinem Rückendabschnitt an einen zugeordneten Anschlag (26) anstößt, der starr an dem Stützrahmen (13) angebracht ist.

3. Vorrichtung nach einem der vorhergehenden Ansprüche, wobei das Sperrmittel (21, 26, 28, 29) ein Sperrelement (21, 28, 29) umfasst, das in dem Rückendabschnitt von jedem Aufhängungsarm (16) angeordnet ist.

4. Vorrichtung nach einem der Ansprüche 2 und 3, wobei jedes Sperrelement (21, 28, 29) aus einem Zapfen (21), der im Wesentlichen rechtwinklig von dem zugehörigen Aufhängungsarm (16) vorsteht und durch ein Langloch (27) verläuft, das in dem zugehörigen Anschlag (26) ausgebildet ist, und einem abnehmbaren Stift (29) ausgebildet ist, der durch ein quer verlaufendes Loch (22) in dem Zapfen (21) verläuft, wobei die zwei Stifte (29) mit den Anschlägen (26) zum Verhindern des Schwenkens der Aufhängungsarme (16) aus der zweiten Endposition weg von der ersten Endposition zusammenwirken.

## Revendications

1. Un accessoire (11) comme un ensemble de tondeuse à gazon destiné à être monté à l'avant sur un véhicule portant l'accessoire, ledit accessoire étant raccordé à un dispositif de montage avant ayant un cadre de support (13) à partir duquel l'accessoire est suspendu et qui a au moins un bras de support (14) qui est adapté pour être monté dans la partie avant du véhicule de telle sorte qu'il se projette vers l'avant du véhicule et est raccordé au véhicule, en pivotement autour d'un premier axe transversal, horizontal pour faire pivoter le cadre de support (13) entre une position basse qui correspond à la position de travail de l'accessoire (11) et une position relevée qui correspond à la position de transport de l'accessoire,
**caractérisé en ce que** l'accessoire (11) est suspendu à un cadre de support (13) par deux bras de suspension (16) qui sont pour l'essentiel parallèles à au moins un dit bras de support (14) et transportent l'accessoire d'une manière non pivotante et qui ont chacun une partie avant qui transporte une roue de support (19) qui est adaptée, lorsque l'accessoire est dans sa position de travail, pour rouler sur le sol (18) et une partie arrière et qui sont raccordés, en pivotement autour d'un deuxième axe (24) parallèle au premier axe, au cadre de support (13) en un point situé entre les parties d'extrémité, les bras de suspension (16) étant pivotables par rapport au cadre de support entre une première position d'extrémité, qui est une position de butée et une deuxième position d'extrémité à partir de laquelle les bras de suspension peuvent librement pivoter dans la direction de la position de butée et dans laquelle les bras de suspension sont verrouillés de façon déblocable à l'aide d'un moyen de blocage (21, 26, 28, 29) qui évite le pivotement des bras de suspension (16) depuis la deuxième position d'extrémité dans la direction opposée uniquement à ladite direction, les bras de suspension (16) étant situés dans la deuxième position d'extrémité lorsque le cadre de support (13) est dans la position basse et l'accessoire (11) est, donc, dans la position de travail et que le centre de gravité (25) de l'ensemble suspendu au cadre de support (13) et composé de l'accessoire complet (11, 17), comprenant les bras de suspension (16), est situé en face dudit deuxième axe (24) par lequel les bras de suspension (16), lorsque le cadre de support (13) pivote de la position basse à la position relevée, sont automatiquement pivotés par le poids dudit ensemble par rapport au cadre de support, de la deuxième position d'extrémité à la position de butée, de sorte que l'accessoire (11) est relevé à sa partie arrière, les bras de suspension (16), lorsque le cadre de support (13) pivote de la position basse à la position relevée, atteignant la position de butée avant que le cadre de support n'atteigne la position relevée, pour laquelle les roues de support (19), lorsque le cadre de support continue son mouvement de pivotement vers la position relevée, sont relevées depuis le sol (18).

2. Un dispositif selon la revendication 1 dans lequel chacun des bras de suspension (16) bute, dans la position de butée, avec sa partie d'extrémité arrière contre une butée associée (26) qui est fixée fermement au cadre de support (13).

3. Un dispositif selon une des revendications précédentes dans lequel le moyen de blocage (21, 26, 28, 29) comprend un élément de blocage (21, 28, 29) disposé dans la partie arrière de chaque bras de suspension (16).

4. Un dispositif selon les revendications 2 et 3 dans lequel chaque élément de blocage (21, 28, 29) est formé d'un tourillon (21) qui dépasse en grande partie à angle droit du bras de suspension (16) associé et s'étend à travers un trou oblong (27) formé dans la butée (26) associée et une cheville (29) amovible qui s'étend à travers un trou transversal (22) dans le tourillon (21), les deux chevilles (29) coopérant avec les butées (26) pour éviter le pivotement des bras de suspension (16) de la deuxième position d'extrémité loin de la première position d'extrémité.
